# EUROPÄISCHE PATENTANMELDUNG

(11) **EP 0 574 349 A1**
(43) Veröffentlichungstag der Anmeldung: **15.12.1993**
(21) Anmeldenummer: 93810366.0
(22) Anmeldetag: 18.05.1993
(51) Int. Cl.: C03B 9/41, G05B 19/04, G05B 19/40

(54) **Verfahren zur Qualitätsverbesserung bei der Glasflaschenherstellung**

(30) Priorität: 18.05.1992 CH 1578/92
(71) Anmelder: Sadokierski, Janusz, CH-5444 Künten (CH)
(72) Erfinder: Sadokierski, Janusz, CH-5444 Künten (CH)
(74) Vertreter: Legland, Brynjulv

(57) **Zusammenfassung**

Beim Verfahren zur Qualitätsverbesserung bei der Glasflaschenherstellung werden die einzelnen Stufen und Stationen der Glasmaschine mittels Infrarot- und übliche CCD-Kameras, sowie Holographie, holographische Interferometrie überwacht.

Ferner werden Computer mit speziell für die Flaschenherstellung entwickelte Software mit dem Zweck eingesetz, den Herstellungsvorgang zu überwachen.

Durch den Einsatz der erwähnten Überwachungsmittel vor dem Erwärmer, ist es möglich, ungünstige Entwicklungen des Produktionsablaufes schnell zu ermitteln, so dass kein nennenswerter Einfluss auf die Produktion von einwandfreien Flaschen entsteht.

In der Weise können Fehlentwicklungen, wie z.B. zu dünne Wandung oder Tropfen an den Flaschen, frühzeitig festgetellt und behoben werden.

Beim Verfahren wird eine Überwachungsvorrichtung benutzt, die zwischen der Glasmaschine und dem Glasbehälter-Erwärmer angeordnet ist.

## Beschreibung

Die Erfindung betrifft ein Verfahren zur Qualitätsverbesserung bei der Glasflaschenherstellung.

Zur Herstellung von Glasflaschen wird eine Glasschmelze, z.B. aus Sand, Soda, Kalkstein usw., in einer Wanne erwärmt, und von dieser Schmelze wird ein Tropfen passender Grösse in eine Rohlingform eingelassen. Der Tropfen wird durch Luftzufuhr und Niederblasen bzw. Vorblasen in der Form zu einem Rohling verformt. Der Rohling wird dann in einer weiteren Stufe in einer Fertigform eingelassen und nach Anwärmen und Fertigblasen zu einer Flasche verarbeitet.

Beim Herstellungsvorgang ist es wichtig, dass die einzelnen Stufen oder Stationen möglichst genau einstellbar sind, weil dadurch die gleichmässige Qualität des fertigen Produktes gewährleistet ist.

Ein Problem bei dieser Ausführung besteht darin, dass die zur Zeit benutzten Steuerungsglieder nicht genügend genau oder schnell genug arbeiten. Dies führt zu ungleichmässigen Produkten, die beispielsweise unterschiedliche Wandstärken oder auch Luftblasen aufweisen.

Unterschiedliche Wandstärken, die erst nach einer genauen Messung feststellbar sind, können zu Reklamationen und sogar Schäden durch das Ausfliessen der in den Flaschen enthaltenen Flüssigkeit führen, was mit Schadenansprüchen und Schadenersatz verbunden ist.

Ein weiterer Nachteil besteht darin, dass die Flaschenwände Luftblasen enthalten, die das Aussehen der Flaschen mindern und leicht zu Brüchen führen können.

Es wird ferner auf die Tatsache hingewiesen, dass bisherige Verfahren eine Überwachung nach dem Erwärmer umfasste. Dies bedeutet aber, dass Fehlentwicklungen sehr spät im Herstellungsprozess aufgedeckt wurden, so dass eine ganze Menge von nicht einwandfreien Flaschen oder Ausschuss hergestellt wurde, bevor der Fehler entdeckt und wirksam behoben werden konnte.

Diese genannten Nachteile des bestehenden Herstellungsverfahrens mindern die Qualität der hergestellten Flaschen und es besteht somit ein Bedarf diese Mängel zu beheben.

Aufgabe der Erfindung ist somit die Schaffung eines Verfahrens, das die obigen Nachteile nicht aufweist und die Herstellung von fehlerfreien Flaschen gewährleistet.

Dabei ist es wichtig, dass Fehlentwicklungen bei der Produktion bereits vor dem Erwärmer entdeckt werden, damit die Herstellung von grösseren Mengen Ausschuss gänzlich vermieden wird.

Diese Aufgabe ist erfindungsgemäss durch die Merkmale im Kennzeichnungsteil des ersten Patentanspruches gelöst.

Ausführungsformen sind in den abhängigen Ansprüchen umschrieben.

Das so geschaffene Verfahren garantiert eine sichere und preisgünstige Lösung der vorliegenden Probleme und somit ein einwandfreies Produkt.

Bei der Auslegung der gesamten, verbesserten Produktionsanlage werden insbesondere die folgenden Massnahmen getroffen:

Die einzelnen Stufen oder Stationen der Herstellung werden von berührungslosen Sensoren überwacht, die z.B. aus
1) Infrarotkameras, CCD-Kameras, synthetischer Holographie, holographischer Interferometrie usw., oder
2) Computer mit Software für die Auswertung bestehen, wobei die notwendigen Daten von Sensoren vom Glasmaschinenüberwacher (Monitio mit Tastatur für den Datenverkehr) oder von einem Glasmaschinen-Computer für die Analyse herrühren können.

Die Sensoren sind z.B. in einer Messeinheit zwischen der Glasmaschine und dem Glasbehälter-Erwärmer untergebracht.

Bei den häufigsten Fehlerquellen handelt es sich z.B. um die folgenden Stufen oder Stationen des Herstellungsvorganges:
a) den Schneidemechanismus für den Glastropfen, der von einem Steuerventil betätigt wird,
b) den Schliessmechanismus für die Form, der von einem Druckreduktionsventil betätigt wird,
c) den Trichtermechanismus für die Zufuhr der Glasschmelze, der ebenfalls von einem Druckreduktionsventil betätigt wird,
d) den Pegelmechanismus für die Glasschmelze, der auch von einem Druckreduktionsventil gesteuert wird, und
e) die Abstellplatte für die geblasenen Flaschen, an der die Drehzahl des Ventilators erhöht oder die Ventile oder deren Öffnungszeiten geändert werden.

Die genannten Fehlerquellen können auf verschiedene Arten, z.B. dadurch, behoben werden, dass die Stationen a) bis e) gereinigt oder Teile ersetzt werden.

Bei einer fehlerhaften Produktion wird oder wurde es meistens zuerst versucht, die Form zu wechseln oder die Temperatur zu ändern, d.h. normalerweise zu erhöhen, oder eine Reinigung der Form durchgeführt.

Es ist aber wichtig, dass die einzelnen Stationen genau überwacht werden, damit die Ursache der Störung bereits ganz am Anfang schnell und wirksam behoben wird, bevor sie einen grösseren Schaden angerichtet hat. Zu diesem Zweck werden die bereits unter Punkt 1) und 2) erwähnten Massnahmen eingesetzt, die ein sicheres Überwachen der möglichen Störungsquellen bewirken, so dass nennenswerte Schäden vermieden werden.

Das beschriebene Verfahren funktioniert in der Weise, dass der Maschinenoperateur seine Befehle - wie bisher - auf Grund der Glasmaschinensteuerung und deren Daten ausübt. Er berücksichtigt ferner die von der Messeinheit kommenden Signale, die entweder über eine manuelle Steuerung oder automatisch in den Herstellungsvorgang eingreifen. Mittels dieser Signale von der Messeinheit ist es möglich, Fehlerquellen bereits bei deren Entstehung aufzuspüren und die erforderliche Abhilfe zu treffen, bevor sie wirksam werden.

Zur Behebung der an den Stationen a) bis e) auftretenden Mängel können verschiedene Mittel eingesetzt werden, die sich nach den jeweiligen Erfordernissen richten, wobei die Art der Flaschen, deren Preis und Qualität, eine wichtige Rolle spielen. Bei besonders kostspieligen Flaschen kann es zweckmässig sein, die Mittel aufwändiger zu gestalten.

Z.B. bei Bierflaschen, in welchen ein relativ hoher Innendruck besteht, ist eine hohe Druckfestigkeit wichtig. Andererseits ist es in der Kosmetikbereich wichtig, dass die Flasche ein perfektes Äusseres aufweist, so dass Luftblasen und Tropfenbildung usw. vollständig vermieden werden.

## Patentansprüche

1. Verfahren zur Qualitätsverbesserung bei der Glasflaschenherstellung, bei dem die einzelnen Stufen und Stationen der Glasmaschine zur Ermittlung von auftretenden Produktionsfehlern überwacht werden, dadurch gekennzeichnet, dass die Stufen und Stationen durch Vorrichtungen vor dem Erwärmer überwacht werden, die eine lückenlose und schnelle Feststellung von sich anbahnenden Fehlentwicklungen bewirken und diese verhindern, bevor sie einen Schaden ausrichten können.

2. Verfahren nach Anspruch 1, dadurch gekennzeichnet, dass man Infrarot- oder CCD-Kameras, oder auch Ultraschallvorrichtungen als Überwachungseinrichtungen einsetzt.

3. Verfahren nach Anspruch 1 oder 2, dadurch gekennzeichnet, dass allein oder zusätzlich synthetische Holographie, holographische Interferometrie als Überwachungsvorrichtungen eingesetzt werden.

4. Verfahren nach einem der Ansprüche 1 bis 3, dadurch gekennzeichnet, dass man zusätzlich einen Überwachungscomputer mit speziell für diesen Zweck entwickelte Software einsetzt.

5. Verfahren nach Anspruch 4, dadurch gekennzeichnet, dass man die erforderlichen Daten für den Überwachungscomputer von Sensoren oder von der Glasmaschine übernimmt.

6. Verfahren nach Anspruch 4, dadurch gekennzeichnet, dass man die erforderlichen Daten von einem Glasmaschinencomputer ableitet.

7. Verfahren nach einem der Ansprüche 4 bis 6, dadurch gekennzeichnet, dass der Überwachungscomputer auf Abweichungen von einem idealen Produktionsverlauf anspricht und auf Grund von diesen Abweichungen Massnahmen verursacht, welche eine Aufhebung der Abweichungen bewirkt.

8. Verfahren nach einem der Ansprüche 4 bis 7, dadurch gekennzeichnet, dass der Überwachungscomputer für Verwendung von unterschiedlichen Software-Varianten für verschiedene Produktionsabläufe ausgelegt ist.

9. Verfahren nach einem der Ansprüche 1 bis 8, dadurch gekennzeichnet, dass die Überwachungsvorrichtung zwischen der-Glasmaschine und dem Glasbehälter-Erwärmer angeordnet ist.
